(19) Europäisches Patentamt
European Patent Office
Office européen des brevets

(11) EP 1 028 990 B1

(12) **EUROPÄISCHE PATENTSCHRIFT**

(45) Veröffentlichungstag und Bekanntmachung des Hinweises auf die Patenterteilung:
**07.01.2004 Patentblatt 2004/02**

(21) Anmeldenummer: **98958860.3**

(22) Anmeldetag: **21.10.1998**

(51) Int Cl.⁷: **C08G 65/10**

(86) Internationale Anmeldenummer:
**PCT/EP1998/006689**

(87) Internationale Veröffentlichungsnummer:
**WO 1999/023135 (14.05.1999 Gazette 1999/19)**

(54) **VERFAHREN ZUR HERSTELLUNG TEILKRISTALLINER POLYETHERPOLYOLE**

METHOD FOR PRODUCING PARTIALLY CRYSTALLINE POLYETHER POLYOLS

PROCEDE DE PRODUCTION DE POLYOLS DE POLYETHER PARTIELLEMENT CRISTALLINS

(84) Benannte Vertragsstaaten:
**BE DE ES FR GB IT NL**

(30) Priorität: **03.11.1997 DE 19748359**

(43) Veröffentlichungstag der Anmeldung:
**23.08.2000 Patentblatt 2000/34**

(73) Patentinhaber: **Bayer Aktiengesellschaft**
**51368 Leverkusen (DE)**

(72) Erfinder:
- **SCHÄFER, Walter**
  **D-42799 Leichlingen (DE)**
- **HOFMANN, Jörg**
  **D-47829 Krefeld (DE)**
- **GUPTA, Pramod**
  **D-50181 Bedburg (DE)**
- **MÜLLER, Hanns-Peter**
  **D-51519 Odenthal (DE)**
- **PIELARTZIK, Harald**
  **D-47800 Krefeld (DE)**

(56) Entgegenhaltungen:
**EP-A- 0 755 779** **US-A- 3 432 445**

- **WU B ET AL: "STEROREGULAR POLMERIZATION OF (R,S)-PROPYLENE OXIDE BY AN ALUMOXANE-PROPYLENE OXIDE COMPLEX" MACROMOLECULES, Bd. 30, Nr. 2, 27. Januar 1997, Seiten 316-318, XP000637663**
- **SHIBATANI K. ET AL.: 'Polyurethanes. IV. Effect of Poly(propylene Glycol) Tacticity on the Properties of Block Copolyether-Urethanes' JOURNAL OF POLYMER SCIENCE: POLYMER CHEMISTRY EDITION Bd. 15, 1977, Seiten 1655 - 1666**
- **TEYSSIé P. ET AL.: 'Metal-Alcoholate Initiators: Source of Answers and Questions in Ring-Opening Polymerization of Heterocyclic Monomers' POLYMER PREPRINTS 1984, Seiten 218 - 219**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 028 990 B1

**Beschreibung**

Die Erfindung betrifft ein Verfahren zur Herstellung von neuartigen, teilkristallinen Polyetherpolyolen einer Hydroxyl-Funktionalität ≥2.

Aus der Literatur ist bekannt, daß mit kristallisierenden Polyetherpolyolen auf Basis von Propylenoxid einer Funktionalität von 2 nach dem Isocyanat-Polyadditionsverfahren Produkte mit verbesserten mechanischen Eigenschaften synthetisiert werden können (J. of Polymer Sci. (Polym. Chem. Ed.) Vol. 15, 1655ff (1977)). Die Herstellung der kristallinen hydroxylfunktionellen Dihydroxypolyether aus isotaktischen Polypropylenglykolen durch Ozonolyse mit anschließender Hydrierung mit feuchtigkeits- und sauerstoffempfindlichen Reagenzien und Fraktionierung ist äußerst aufwendig und wenig variabel. Es bestand daher die Aufgabe, nach einem weniger aufwendigen Verfahren mit großen Variationsmöglichkeiten eine breite Palette kristalliner Hydroxypolyether einer Funktionalität ≥ 2, die z.B. für die PUR-Synthese geeignet sind, zur Verfügung zu stellen.

Weiterhin ist bekannt, daß sich bimetallische µ-Oxoalkoxide für die Polymerisation von Propylenoxid zu kristallisierenden Polypropylenoxiden eignen (US-P 3 432 445, Polym. Preprints 218 (1984)). Hinweise auf die Herstellung von Polyetherpolyolen einer geeigneten Hydroxyl-Funktionalität, die als Kettenverlängerer und Vernetzer für die Isocyanat-Polyaddition geeignet sind, sind der Veröffentlichung nicht zu entnehmen.

Diese für die Propylenoxid-Polymerisation eingesetzten bimetallischen Katalysatoren enthalten Monoolsubstituenten, die dann während des Polymerisationsprozesses in das Polypropylenoxid eingebaut werden, was zu Polypropylenoxiden mit einer Hydroxyl-Funktionalität weit unter 2 führt, die z.B. als Kettenverlängerer zur Herstellung von Polyurethanen ungeeignet sind.

Überraschend wurde nun gefunden, daß durch Umsetzung bimetallischer Katalysatoren mit Hydroxylverbindungen einer Funktionalität ≥ 2 Katalysatoren entstehen, die die Polymerisation von Alkylenoxid zu Polyetherpolyolen, einer Funktionalität ≥ 2 ermöglichen. Überraschend ist hierbei, daß die katalytisch aktiven bimetallischen Ausgangsverbindungen, die nach der Literatur (J. of Polym. Sci.: Part A: Polym. Chem., 24, 1423 (1986) empfindlich gegen Verunreinigungen sind, nach der Umsetzung mit Hydroxylverbindungen auch bei Temperaturen von 100 - 160°C für die Alkylenoxid-Polymerisation noch aktiv sind.

Es war auch nicht vorauszusehen, daß die bimetallischen Katalysatoren, die gegenüber Hydroxylverbindungen als polyfunktionell anzusehen sind, in Gegenwart von Hydroxylverbindungen einer Funktionalität ≥ 2 nicht vernetzen bzw. verquallen und katalytisch aktiv bleiben.

Gegenstand der Erfindung ist daher ein Verfahren zur Herstellung von neuartigen, teilkristallinen Polyetherpolyolen einer Hydroxyl-Funktionalität ≥ 2, das dadurch gekennzeichnet ist, daß man Alkylenoxide in Gegenwart bimetallischer µ-Oxoalkoxide entsprechend der Formel (I)

$$(RO)_{x-1}\text{-}M_2\text{-}O\text{-}M_1\text{-}O\text{-}M_2\text{-}(OR)_{x-1} \qquad (I),$$

wobei

R für einen $C_1$-$C_{10}$-Alkylrest steht,

$M_1$ für Zink, Cobalt. Molybdän, Eisen, Chrom oder Mangan steht,

$M_2$ Aluminium oder Titan bedeutet und

x für 3 bis 4 steht,

polymerisiert, wobei die µ-Oxoalkoxide (I) zuvor mit Hydroxylverbindungen der Formel (II)

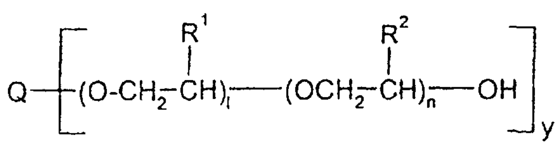

(II),

in welcher

Q für eine $C_2$-$C_{20}$-Alkylgruppe steht,

$R^1$ und $R^2$ unabhängig voneinander Wasserstoff oder $C_1$-$C_{20}$-Kohlenwasserstoff-Reste bedeuten,

l und n unabhängig voneinander für Zahlen von 0 bis 40 stehen und

y eine ganze Zahl von 2 bis 6 bedeutet,

umgesetzt wurden.

Als bimetallische μ-Oxoalkoxide kommen bevorzugt solche in Frage, in denen $M_1$ für Zink und $M_2$ für Aluminium stehen, x die Zahl 3 ist und R für n- und iso-Propyl sowie n-Butyl steht.

Die für den Einsatz in das erfindungsgemäßc Verfahren in Frage kommenden bimetallischen μ-Oxoalkoxide sind bekannt und beispielsweise im zuvor genannten US-Patent 3 432 445 näher beschrieben.

Als Hydroxylverbindungen der Formel (II), die mit den eingesetzten bimetallischen μ-Oxoalkoxiden umgesetzt werden, kommen insbesondere solche in Frage mit einer Funktionalität von ≥2, bevorzugt 2 bis 6, die ein mittleres Molekulargewicht von 90 bis 6000, bevorzugt 90 bis 2000 besitzen. Das mittlere Molekulargewicht wird in üblicher Weise bestimmt durch Messung der OH-Zahl bzw. durch GPC gegen Polystyrol als Vergleich.

Als Hydroxyverbindungen der Formel (II) werden insbesondere Polypropylenglykole, Polyethylenglykole, Polyethylenoxidpolypropylenoxid-Blockcopolymere und statistische C-O-PO-Copolymere genannt neben den bekannten niedermolekularen Polyhydroxyverbindungen. Derartige Verbindungen werden z.B. in Kirk-Othmer (3) 1, 754 bis 789 beschrieben.

Ganz besonders bevorzugt werden als Hydroxylverbindungen genannt:

1,4-Butandiol, Diethylenglykol, Dipropylenglykol, Tripropylenglykol, sowie auf Propylenglykol, 1,4-Butandiol, Glycerin, Trimethylolpropan oder Sorbit gestartete Polypropylenglykole eines $\overline{M}_n$ von 200 bis 2000 oder Mischpolymere aus Propylenoxid und Ethylenoxid gestartet auf Ethylenglykol, Propylenglykol, 1,4-Butandiol, Glycerin oder Trimethylolpropan eines $\overline{M}_n$ von 220 bis 2000.

Die Umsetzung des eingesetzten bimetallischen μ-Oxoalkoxids der Formel (I) mit einer Hydroxylverbindung der Formel (II) geschieht in der Weise, daß man 1 mol Polyol (II), mit $5 \cdot 10^{-4}$ bis 0,6, bevorzugt $1 \cdot 10^{-3}$ bis 0,3 mol μ-Oxoalkoxid vermischt und die Mischung etwa 0,5 bis 10 Stunden, bevorzugt 2 bis 5 Stunden auf ca. 100 bis 150°C, bevorzugt 110 bis 130°C heizt.

Anschließend wird die Reaktionsmischung, gegebenenfalls unter Vakuum, bei erhöhter Temperatur (ca. 100 bis 150°C) einige Zeit gerührt (etwa 0,5 bis 5 Stunden).

Danach wird die Reaktionsmischung mit einem organischen Lösungs- und/oder Verdünnungsmittel, z.B. einem geeigneten Kohlenwasserstoff. wie Xylol und/oder Ligroin, verdünnt, bevorzugt auf 80 bis 50 Gew.-%, und danach das Lösungsund/oder Verdünnungsmittel bei vermindertem Druck (etwa 0,01 bis 1013 mbar) wieder abdestilliert.

Das so mit den Polyolen modifizierte bimetallische μ-Oxoalkoxid wird zur Herstellung der teilkristallinen Polyetherpolyole anschließend mit geeigneten Alkylenoxiden umgesetzt. Die Umsetzung wird bevorzugt bei 20 bis 200°C, insbesondere bei 80 bis 150°C, unter Normal- oder erhöhtem Druck bis 20 bar durchgeführt.

Als Alkylenoxide kommen die für solche Reaktionen bekannten Alkylenoxide in Frage, bevorzugt Propylenoxid, 1,2-Butylenoxid, Epichlorhydrin, Alkylglycidether sowie deren Mischungen. Bevorzugt wird Propylenoxid oder eine Mischung aus Propylenoxid und Ethylenoxid eingesetzt. Vor der Umsetzung mit Alkylenoxiden kann das modifizierte μ-Oxoalkoxid noch mit Hydroxylverbindungen einer Funktionalität ≥2 verdünnt werden, bevorzugt mit Hydroxylverbindungen der Formel (II)

Die Umsetzung des modifizierten Katalysators mit den Alkylenoxiden kann in Substanz oder in einem geeigneten inerten organischen Lösungsmittel, wie Toluol, Xylol und/oder Tetrahydrofuran, durchgeführt werden. Die Konzentration und Menge des Lösungsmittels wird so gewählt, daß unter den gegebenen Reaktionsbedingungen eine gute Beherrschung der Umsetzungsreaktion möglich ist.

Das modifizierte bimetallische μ-Oxoalkoxid wird dabei im allgemeinen in Mengen von $5\text{-}10^{-2}$ bis 60 Mol-%, bevorzugt in Mengen von 0,1 bis 20 Mol-%, bezogen auf die Menge des herzustellenden Polyetherpolyols, eingesetzt.

Die nach dem erfindungsgemäßen Verfahren hergestellten neuen, teilkristallinen Polyetherpolyole mit einer Funktionalität von ≥2, bevorzugt 2 bis 6, besitzen mittlere Molekulargewichte $\overline{M}_n$ von 500 bis 100.000, bevorzugt von 1000 bis 10.000, bestimmt nach GPC gegen Polystyrol bzw. über den Gehalt an Hydroxyl-Endgruppen (OH-Zahl), und einen die Kristallinität bestimmenden Mol-Anteil an isotaktischen Triaden von >28 %, bevorzugt >33 %, bestimmt mittels $^{13}C$-NMR-Spektroskopie.

Gegenstand der vorliegenden Erfindung sind demnach auch die neuen, teilkristallinen Polyetherpolyole der oben beschriebenen Art.

Das erfindungsgemäße Verfahren kann sowohl kontinuierlich als auch diskontinuierlich durchgeführt werden, beispielsweise in einem Batch- oder Semibatch-Verfahren.

Nach dem erfindungsgemäßen Verfahren erfolgt die Aufarbeitung des Rohprodukts bevorzugt durch Lösen des hergestellten Polyetherpolyols in einem Lösungsmittel, wie Toluol, Xylol, Tetrahydrofuran, Essigester und/oder Methylenchlorid.

Der Katalysator wird dann durch angesäuertes Wasser zerstört und die Reaktionsprodukte werden mit wäßriger Säure (<25 Gew.-%), bevorzugt mit Wasser, extrahiert. Zur Zerstörung des Katalysators werden bevorzugt 1 bis 2 Säureäquivalente eingesetzt. Als Säuren kommen u.a. Salzsäure, Phosphorsäure, Schwefelsäure, Benzoesäure, Essigsäure und/oder Milchsäure in Frage. Selbstverständlich können auch andere Säuren benutzt werden.

Nach dem intensiven Ausschütteln mit wäßriger Säure wird die überschüssige Säure durch Waschen mit Wasser, gegebenenfalls in Gegenwart einer alkalisch reagierenden Verbindung, wie Natriumbicarbonat, entfernt. Die erhaltene Polyollösung wird vom Wasser abgetrennt, getrocknet und vom Lösungsmittel befreit.

Durch fraktionierte Fällung in der Kälte aus geeigneten Lösungsmitteln, wie z.B. Aceton, kann das Produkt weiter gereinigt werden.

Die nach dem erfindungsgemäßen Verfahren hergestellten, teilkristallinen Polyetherpolyole eignen sich hervorragend für die Herstellung von Polyurethanwerkstoffen, wie PUR-Elastomere, PUR-Schäume und PUR-Beschichtungen. Die Herstellung der genannten PUR-Werkstoffe ist bekannt und wird beispielsweise im Kunststoff-Handbuch, Band 7, 3. Auflage, Carl-VerlagVerlag, 1993, beschrieben.

## Beispiele

### Herstellung eines bimetallischen μ-Oxoalkoxids A auf Basis von Zink und Aluminium

9 g Zinkacetat und 20,4 g Aluminiumisopropylat wurden in 500 ml Decalin auf Rückfluß erhitzt und der sich bildende Essigsäureisopropylester wurde über eine Kolonne abdestilliert.

Nachdem kein Essigsäureisopropylester mehr entstand, wurde die Reaktionslösung vom Lösungsmittel befreit und der Rückstand in 200 ml n-Heptan aufgenommen. Man erhielt eine 0,35 molare Lösung von Di-μ-oxo-[bis (1-methylethyloxy)-aluminium]zink.

### Beispiel 1

a. 1,3 g des bimetallischen μ-Oxoalkoxids A, gelöst in 10 ml Heptan, wurden zu 100 g eines Polypropylenglykols der OH-Zahl 112 mg KOH/g gegeben und bei 130°C für 3 Stunden unter einem Druck von 0,2 mbar gerührt.

Anschließend wurde die Lösung mit 10 ml Toluol versetzt und die Reaktionsmischung für weitere 2 Stunden bei 120 - 130°C gerührt. Danach wurde im Hochvakuum das Toluol abdestilliert und die Reaktionsmischung nochmals 1 Stunde auf 130°C erhitzt.

b. Das voraktivierte Polypropylenglykol wurde anschließend in einen Autoklaven überführt und bei einem Druck von 3 bar und einer Temperatur von 130 bis 140°C mit 500 g Propylenoxid umgesetzt. Das Rohprodukt wird in Toluol gelöst und mit 2 n Salzsäure bis zum pH <5 versetzt, dann mit Wasser ausgeschüttelt. Zur Neutralisation wurde das Produkt noch mit einer wäßrigen Bicarbonat-Lösung gewaschen. Die organische Phase wurde abgetrennt und getrocknet.

Das teilkristalline, wachsartige Produkt hat eine OH-Zahl von 20 mg KOH/g und nach GPC ein $M_n$ von 5900 Die kristalline Phase im Polyetherpolyol schmolz bei 55°C auf. Das Produkt enthielt einen Mol-Anteil an isotaktischen Triaden von 64 %.

### Beispiel 2

a. 2,7 g des bimetallischen μ-Oxoalkoxids A, gelöst in 20 ml Heptan, wurden zu 10 g eines Propylenglykols der OH-Zahl 515 mg KOH/g gegeben und bei 130°C für 5 Stunden unter einem Druck von 0,2 mbar gerührt.

Anschließend wurden noch 40 g des Polyethers mit der OH-Zahl 515 zugesetzt, und die Reaktionsmischung wurde noch 3 Stunden bei 130°C unter Vakuum nachgerührt.

b. Die Katalysatorlösung wurde in einen Autoklaven überführt und bei einem Druck von 3 bar und einer Temperatur von 130 bis 140°C mit 400 g Propylenoxid umgesetzt. Das Rohprodukt wurde in Methylenchlorid gelöst und mit 20 %iger Phosphorsäure bis zum pH <5 versetzt und mit Wasser ausgeschüttelt. Zur Neutralisation wurde das

Produkt noch mit einer wäßrigen Bicarbonat-Lösung gewaschen. Die organische Phase wurde abgetrennt und getrocknet.

Das teilkristalline, wachsartige Produkt hatte eine OH-Zahl von 65 mg KOH/g und nach GPC ein $M_n$ von 1900.

**Beispiel 3**

a. 5,5 g des bimetallischen μ-Oxoalkoxids A, gelöst in 40 ml Heptan, wurden zu 100 g eines auf Trimethylolpropan gestarteten Hydroxypolyethers auf Propylenoxid-Basis der OH-Zahl 380 mg KOH/g gegeben und bei 130°C für 5 Stunden unter einem Druck von 0,2 mbar gerührt.

Anschließend wurde die Lösung mit 10 ml Toluol versetzt und die Reaktionsmischung für weitere 2 Stunden bei 120 - 130°C gerührt. Danach wurde im Hochvakuum das Toluol abdestilliert und die Reaktionsmischung nochmals 1 Stunde auf 130°C erhitzt.

b. Die Katalysatorlösung wurde anschließend in einen Autoklaven überführt und bei einem Druck von 3 bar bei einer Temperatur von 150°C mit 1 kg Propylenoxid umgesetzt.

Das Rohprodukt wurde in Methylenchlorid gelöst und mit 2 n Salzsäure bis zu einem pH <5 versetzt und dann mit Wasser ausgeschüttelt. Zur Neutralisation wurde das Produkt noch mit einer wäßrigen Bicarbonat-Lösung gewaschen. Die organische Phase wurde abgetrennt und getrocknet.

Das teilkristalline, wachsartige Produkt hat eine OH-Zahl von 42 mg KOH/g und nach GPC ein $M_n$ von 4290.

**Beispiel 4**

6,5 g der bimetallischen μ-Oxoalkoxid-Verbindung A, gelöst in 50 g n-Heptan wurden zu 500 g eines Ethylenoxid-Propylenoxid-Polyethers (50 % Ethylenoxid) der OH-Zahl 56 mit 70 bis 80 % an primären OH-Gruppen gegeben und bei 130°C für 3 Stunden unter einem Druck von 0,2 mbar gerührt.

Anschließend wurde die Lösung mit 50 ml Toluol versetzt und die Reaktionsmischung für weitere 2 Stunden bei 120 bis 130°C gerührt. Danach wurde im Hochvakuum das Toluol abdestilliert und die Reaktionsmischung nochmals 1 Stunde auf 130°C erhitzt.

Die Katalysatorlösung wurde anschließend in einen Autoklaven überführt und bei einem Druck von 3 bar bei 130 bis 140°C mit 1500 g Propylenoxid umgesetzt. Das Rohprodukt wird in Toluol gelöst und mit 2n Salzsäure bei pH <5 versetzt, dann mit Wasser ausgeschüttelt. Zur Neutralisation wurde das Produkt noch mit einer wäßrigen Bicarbonat-Lösung gewaschen. Die organische Phase wurde abgetrennt und getrocknet.

Das teilkristalline, wachsartige Produkt hat eine OH-Zahl von 14 und nach GPC ein $M_n$ von 7800.

**Beispiel 5**

1,3 g des bimetallischen μ-Oxoalkoxids A, gelöst in 10 ml Heptan, wurden zu 100 g eines auf Sorbit gestarteten Polypropylenglykols der OH-Zahl 450 mg KOH/g gegeben und bei 130°C für 3 Stunden unter einem Druck von 0,2 mbar gerührt.

Anschließend wurde die Lösung mit 10 ml Toluol versetzt und die Reaktionsmischung für weitere 2 Stunden bei 120 bis 130°C gerührt. Danach wurde im Hochvakuum das Toluol abdestilliert und die Reaktionsmischung nochmals 1 Stunde auf 130°C erhitzt.

Das voraktivierte Polyol wurde anschließend in einem Autoklaven bei einem Druck von 3 bar und einer Temperatur von 150°C mit 250 g Propylenoxid umgesetzt, Nach dem Reinigungsschritt analog Beispiel 1b hat das teilkristalline Produkt eine OH-Zahl von 135 mg KOH/g und nach GPC ein $M_n$ von 2600.

**Beispiel 6**

1000g eines analog Beispiel 1a voraktivierten Polypropylenglykols der OH-Zahl 112 mg KOH/g wurden bei 120 bis 130°C unter Normaldruck mit 1000 g Propylenoxid umgesetzt. Das Rohprodukt wird in Toluol gelöst, mit 150 ml 2n Salzsäure versetzt und mit Wasser ausgeschüttelt. Zur Neutralisation wurde das Produkt noch mit wäßriger Bicarbonat-Lösung gewaschen.

Die organische Phase wurde abgetrennt und getrocknet. Das teilkristalline Produkt hat eine OH-Zahl von 57 mg KOH/g und nach GPC ein $M_n$ von 2000.

**Beispiel 7**

50 g eines analog Beispiel 1a voraktivierten Polypropylenglykols der OH-Zahl 112 mg KOH/g wurden mit 50 ml Toluol versetzt und anschließend bei 120°C mit 50 g Propylenoxid umgesetzt. Nach dem Reinigungsschritt analog Beispiel 1b hat das viskose Produkt eine OH-Zahl von 57,5 mg KOH/g und nach GPC ein $M_n$ von 2000.

**Beispiel 8**

250 g eines analog Beispiel 1a voraktivierten Polypropylenglykols der OH-Zahl 112 mg KOH/g wurden mit 500 g Xylol versetzt und anschließend im Autoklaven bei einem Druck von 3 bar und einer Temperatur von 150°C mit 750 g Propylenoxid umgesetzt. Nach dem Reinigungsschritt analog Beispiel 1b hat das bei Raumtemperatur erstarrende Produkt eine OH-Zahl von 32 mg KOH/g und nach GPC ein $M_n$ von 3700.

**Patentansprüche**

1. Verfahren zur Herstellung von teilkristallinen Polyetherpolyolen einer Hydroxyl-Funktionalität ≥ 2, **dadurch gekennzeichnet, dass** man

   a) μ-Oxoalkoxide entsprechend der Formel (I)

   $$(RO)_{x-1}\text{-}M_2\text{-}O\text{-}M_1\text{-}O\text{-}M_2\text{-}(OR)_{x-1} \qquad (I),$$

   wobei

   R für einen $C_1$-$C_{10}$-Alkylrest steht,
   $M_1$ für Zink, Cobalt, Molybdän, Eisen, Chrom oder Mangan steht,
   $M_2$ Aluminium oder Titan bedeutet und
   X für 3 bis 4 steht,

   mit Hydroxyverbindungen der Formel (II)

   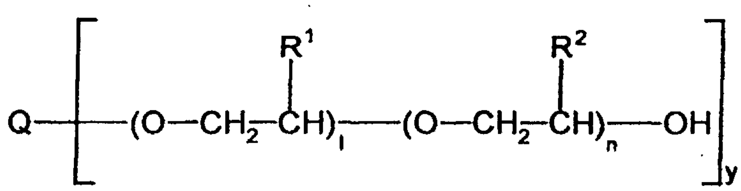

   (II)

   in welcher

   Q für eine $C_2$-$C_{20}$-Alkylgruppe steht,
   $R^1$ und $R^2$ unabhängig voneinander Wasserstoff oder $C_1$-$C_{20}$-Kohlenwasserstoff-Reste bedeuten,
   l und n unabhängig voneinander für Zahlen von 0 bis 40 stehen und
   y eine ganze Zahl von 2 bis 6 bedeutet,

   umsetzt, und
   b) Alkylenoxide in Gegenwart des in Schritt a) mit Hydroxylverbindungen modifizierten μ-Oxoalkoxids polymerisiert.

2. Verfahren nach Anspruch 1, **dadurch gekennzeichnet, dass** man als bimetallische μ-Oxoalkoxide solche einsetzt, in denen $M_1$ für Zink und $M_2$ für Aluminium steht, x die Zahl 3 ist und R für n- und iso-Propyl sowie n-Butyl steht.

3. Verfahren nach Anspruch 1, **dadurch gekennzeichnet, dass** man als Hydroxyverbindungen der Formel (II) solche einsetzt, die eine Funktionalität von ≥ 2 und ein mittleres Molekulargewicht von 90 bis 6000 besitzen.

**4.** Verfahren nach Anspruch 1, **dadurch gekennzeichnet, dass** man pro 1 mol der Hydroxyverbindung der Formel (II) mit $5 \cdot 10^{-4}$ bis 0,6 mol bimetallischem μ-Oxoalkoxid vermischt.

**5.** Verfahren nach Anspruch 1, **dadurch gekennzeichnet, dass** man nach der Vermischung der μ-Oxoalkoxide mit den Hydroxyverbindungen das Gemisch 0,5 bis 10 Stunden bei 100 bis 150°C heizt.

## Claims

**1.** A process for the preparation of partially crystalline polyether polyols having a hydroxy functionality ≥ 2, **characterised in that**

a) μ-oxoalkoxides corresponding to the formula (I)

$$(RO)_{x-1}\text{-}M_2\text{-O-}M_1\text{-O-}M_2\text{-}(OR)_{x-1} \quad \text{(I)}$$

wherein

R stands for a $C_1$-$C_{10}$ alkyl radical,
$M_1$ stands for zinc, cobalt, molybdenum, iron, chromium or manganese,
$M_2$ means aluminium or titanium and
x stands for 3 to 4,

are reacted with hydroxyl compounds corresponding to the formula (II)

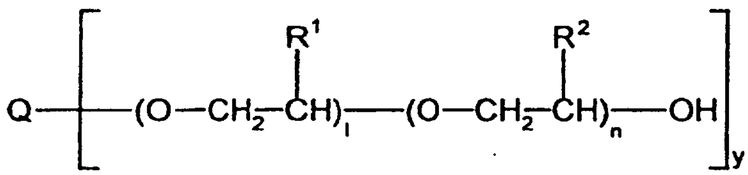

(II)

in which

Q stands for a $C_2$-$C_{20}$ alkyl group,
$R^1$ and $R^2$ mean, independently of one another, hydrogen or $C_1$-$C_{20}$ hydrocarbon radicals,
l and n stand, independently of one another, for numbers from 0 to 40 and
y means an integer from 2 to 6

and

b) alkylene oxides are polymerised in the presence of the μ-oxoalkoxide modified with hydroxyl compounds in step a).

**2.** Process according to Claim 1, **characterised in that** bimetallic μ-oxoalkoxides used are those in which $M_1$ stands for zinc and $M_2$ stands for aluminium, x is the number 3, and R stands for n-propyl and isopropyl and also n-butyl.

**3.** Process according to Claim 1, **characterised in that** hydroxyl compounds corresponding to formula (II) used are those having a functionality ≥ 2 and an average molecular weight from 90 to 6000.

**4.** Process according to Claim 1, **characterised in that** each mole of the hydroxyl compound corresponding to formula (II) is mixed with $5 \cdot 10^{-4}$ mole to 0.6 mole bimetallic μ-oxoalkoxide.

**5.** Process according to Claim 1, **characterised in that** after the μ-oxoalkoxides have been mixed with the hydroxyl

compounds the mixture is heated for 0.5 hours to 10 hours at 100 °C to 150 °C.

## Revendications

1. Procédé de préparation de polyéther-polyols partiellement cristallins, avec une fonctionnalité hydroxyle ≥ 2, **caractérisé en ce que**

   a) on fait réagir des µ-oxoalcoxydes correspondants à la formule (I) :

   $$(RO)_{x-1} - M_2 - O - M_1 - O - M_2 - (OR)_{x-1} \quad (I)$$

   où
   R représente un reste alcoyle en $C_1$-$C_{10}$ ;
   $M_1$ représente le zinc, le cobalt, le molybdène, le fer, le chrome ou le manganèse ;
   $M_2$ signifie aluminium ou titane, et
   x représente 3 à 4,
   avec des composés hydroxylés de la formule (II) :

   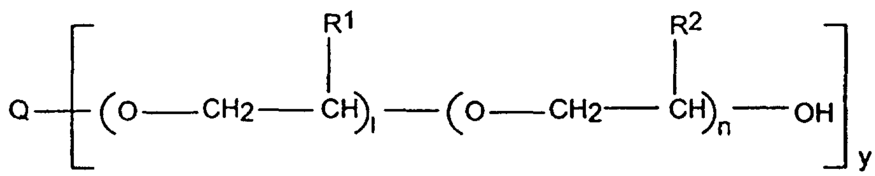
   (II)

   dans laquelle :

   Q représente un radical alcoyle en $C_2$-$C_{20}$ ;
   $R^1$ et $R^2$ représentent indépendamment l'un de l'autre, l'atome d'hydrogène ou un reste hydrocarbure en $C_1$-$C_{20}$ ;
   l et n représentent indépendamment l'un de l'autre, un nombre allant de 0 à 40, et
   y représente un nombre entier allant de 2 à 6, et

   b) on polymérise un oxyde d'alcoylène en présence du µ-oxoalcoxyde modifié avec les composés hydroxylés de l'étape a).

2. Procédé selon la revendication 1, **caractérisé en ce que** l'on met en oeuvre comme µ-oxoalcoxyde bimétallique, ceux dans lesquels $M_1$ représente le zinc et $M_2$ représente l'aluminium, x est le nombre 3 et R représente n- et i-propyle, ainsi que n-butyle.

3. Procédé selon la revendication 1, **caractérisé en ce que** l'on met en oeuvre comme composé hydroxylé de la formule (II), ceux qui possèdent une fonctionnalité ≥ 2, et qui possèdent un poids moléculaire moyen allant de 90 à 6000.

4. Procédé selon la revendication 1, **caractérisé en ce que** par mole du composé hydroxylé de la formule (II), on mélange $5.10^{-4}$ à 0,6 mole de µ-oxoalcoxyde bimétallique.

5. Procédé selon la revendication 1, **caractérisé en ce que** l'on chauffe, après mélange des µ-oxoalcoxydes bimétalliques avec les composés hydroxylés, le mélange pendant 0,5 à 10 heures à des températures situées dans l'intervalle allant de 100 à 150°C.